# EUROPEAN PATENT APPLICATION

(11) **EP 3 663 904 A1**
(43) Date of publication of application: **10.06.2020**
(21) Application number: 18211109.6
(22) Date of filing: 07.12.2018
(51) Int. Cl.: G06F 3/16, G06F 3/01

(54) **PORTABLE MOBILE MODE FOR HEADSET**

(71) Applicant: Iristick NV, 9830 Sint-Martens-Latem (BE)
(72) Inventor: The designation of the inventor has not yet been filed
(74) Representative: Brantsandpatents bvba

(57) **Abstract**

The current invention concerns a method for automatic and adaptive conversion of displayed content on a smartphone, tablet or other (handheld) electronic devices to headsets, particularly to smart glasses.

## Description

### Technical field

The invention pertains to the technical field of conversion of applications for smartphone, tablet, laptop, PCT, etc., to headsets, in particular for smart glasses, without requiring an (almost) entire rewrite of the code.

### Background

There remains a need in the art for an automated conversion system for applications or "apps" for smartphone (and/or tablet, PC, etc.) to a headset with a visual display, which will henceforth also be referred to as smart glasses, without any undue restrictions however.

Smart glasses technology has only recently been introduced, and is still under constant development to tune out childhood diseases, and to optimize a multitude of factors, amongst which battery lifetime, accuracy, processing power, display resolution are a few of the main concerns.

The applicant has noted that because of the relatively new status of smart glasses, along with the issues that still plague the technology, which have kept it from being widely used in non-industrial settings and still limit the application to industrial settings with respect to the potential use, app developers have only recently begun considering the platform for specific products.

Due to the limited public which is interested in apps for smart glasses, the current supply of apps is still limited, as the potential profit is low, especially compared to developing apps for tablets and smartphones. This has caused app developers to largely ignore the smart glasses market, and focus on the 'regular' apps for smartphone and tablet. In some cases, app developers have adapted their smartphone apps for the smart glasses by retooling the code to suit smart glasses, however, this is only in a low number of apps.

A main concern with the conversion of smartphone apps to smart glasses apps is that the modalities for both display and interaction greatly change. The size and resolution (as well as shape) of the visual display of a smartphone are far greater than those of smart glasses, which means the displayed content will need to be adapted for the smaller and more limited viewing window, which is typically also in landscape mode.

Secondly, smart glasses allow only very limited navigational abilities for the user compared to the multi-touch display of a smartphone, so a work-around will need to be implemented here as well.

It is of note that the applicant's proposal is not only directed to the conversion of smartphone apps to smart glasses, but can be considered more generally as a conversion medium and method for adapting the displayed content on a smartphone visual display, to suit smart glasses display modalities.

The applicant aims to open up the general, unaltered smartphone apps and general contents for smart glasses without requiring a rewrite by developers, while maintaining optimal functionality.

### Summary of the invention

The present invention provides a computer-implemented method for automatic conversion and display of contents on a visual display of an electronic display device, preferably a smartphone or tablet, to a visual display of a headset, preferably smart glasses, said headset comprising a navigation system for interacting with the display of the headset, the method comprising the steps of:
a. preferably detecting a user-allowed setting on the electronic display device, preferably the smartphone or tablet, allowing access to the display content of the electronic display device;
b. forcedly starting and maintaining, preferably upon detection of at least the user-allowed setting, a compatibility mode on the electronic display device, which comprises the following, reiterating steps:
   a. retrieving information with respect to interactive objects of the contents of the visual display of the electronic display device, said information with respect to said interactive objects comprising at least location and size, and preferably shape, of said interactive objects on the visual display of the electronic display device;
   b. adapting a set of the interactive objects into a set of headset-interactive objects, whereby the headset-interactive objects are interactable via the navigation system of the headset;
   c. creating a mapping scheme between interactions on one or more of said set of headset-interactive objects to one or more corresponding interactions on one or more of said set of interactive objects on the smartphone or tablet;
c. displaying the adapted contents of the display on the electronic display device onto the display of the headset, whereby said adapted contents are forwarded over a bidirectional data connection between the headset and the electronic display device;
whereby activation of a headset-interactive object by an interaction via the navigation system of the headset is mapped onto activation of the corresponding one or more interactive objects according to said mapping scheme.
Note that in what follows, specific reference will be made to smartphones instead of electronic display devices. It is to be understood that this in no way limits the scope of the invention solely to smartphones, and that smartphone merely is used for ease of notation and clarity, and furthermore to signify the primary form which the electronic devices will take in practice. Additionally, as mentioned before, the term smartphone loosely relates to general handheld electronic devices comprising a navigation system and a visual display, such as tablets and similar devices. Said navigation system may comprise one or more subsystems for providing input, for instance a touchpad, a keyboard, voice recognition, head tracking, pupil tracking (possibly with 'blink' recognition), etc.

In a potential embodiment, the data connection between smartphone and headset is wired, as this allows for fast data transfer at large bandwidths, without requiring too much power. Furthermore, the wired connection can also allow the headset to be (partially) powered from the smartphone (or other device), which typically has a larger power supply than the headset, which is often designed to be light and sleek.
In an alternative embodiment, a wireless connection is provided, for instance via Bluetooth, Wi-Fi, ZigBee, or others. We note that this could even be preferred in certain environments, where a wired connection is deemed hazardous (chemical sites with flammable substances, etc.), and as the data transfer is at a relatively low rate due to the low resolution of most headset displays, the typically lower transfer rate via a wireless connection is of no concern.
Note that the option for both can be provided, working together or as alternatives to each other.

The applicant thus proposes a solution whereby the application's visual representation on the smartphone is not simply 'copied' to the visual display of the headset, and the input of the user to the headset navigation system is not directly transferred to the smartphone navigation system. Instead, the interaction of the user with the headset navigation system is defined in context of a recognized effect on a headset-interactive object, and then converted into the corresponding interaction on the smartphone (navigation system or more directly in the running app). This allows the user to interact more controllably and more directly with the interactive objects on the smartphone, as opposed to solutions such as TeamViewer which allows an electronic device to become a remote navigation system for a host system.
As mentioned previously, simply copying the visual display of the smartphone to the headset's visual display would not allow for proper interaction without substantially adapting the methods of interaction with the application. The touchscreen of the smartphone differs strongly from the interactive abilities of a headset display, as direct interaction is possible with a smartphone, as well as multi-touch interactions. In order to overcome this substantial difference, extensive modifications become necessary, which need to both allow the wide range of possibilities of the original application, while keeping the entire navigation and display simple and easy to interact with.
Secondly, the display mode of a headset will typically differ greatly from that of the smartphone, both in size, shape and resolution, which means by simply copying and pasting the image, it will be deformed and illegible/undecipherable due to the lower resolution and display size. Furthermore, smartphones are typically used in portrait orientation, while most smart glasses have a display in landscape orientation; a situation which cannot be overcome by simply rotating the contents by 90 degrees. Again, measures must be taken to overcome these difficulties, as the displayed contents will need to be optimized (deleting unnecessary details, icons and others, rendering certain images again under lower resolution, etc.) for the display of the headset.
In order to overcome these hurdles, the applicant proposes to use the data behind the visual display of the smartphone. By allowance of the user of the smartphone, the display content of the smartphone can be accessed to some extent, and more exactly, the data behind said display content, in order to force the smartphone to perform a rough optimization of this data for generating an intermediate image for the visual display. A crucial aspect is that interactive content (for instance 'clickable' or 'touchable' icons, items and virtual buttons) is identified and adapted to headset-interactive objects for display on the headset.

In certain embodiments, the icons and/or text for the interactive content can be simply reduced in size (which can be sufficient for simple images), or re-rendered for more intricate pictograms. A combination of the two is also possible, in which case the smartphone or the headset are adapted to determine the 'complexity' of an icon and/or text, and can decide on this basis whether re-rendering or resizing is preferred.

### Description of figures

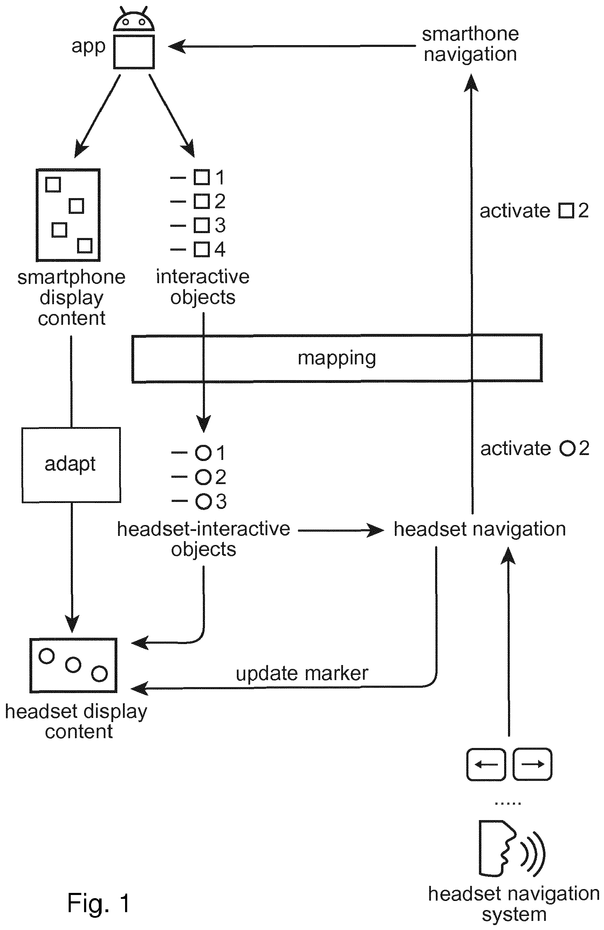

**Figure 1** shows a schematic overview of an embodiment of the method of the invention.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The term "smartphone" refers to both smartphones, tablets and similar handheld electronic devices, such as watches, laptops, game consoles, etc., with a visual display (blackberry), a navigation system (touchscreen, keyboard, etc.) and navigation system. We note that most smartphone applications are directly compatible with tablets, which furthermore underlines the equivalence for the current concept.
It should be considered that the invention is applicable to a wider array of electronic devices however, not necessarily handheld, and as such all electronic devices comprising a navigation system and a visual display can function under the invention at hand. As such, the term "electronic display device" covers all of said devices in what follows. Although the applicant specifically aims at handheld devices for the invention, the scope of the invention reaches beyond handheld devices, for instance PC, smart tv, non-portable game consoles, etc.

The term "smart glasses" will often be used interchangeably with the term "headset" in this document, and unless explicitly mentioned to the contrary, refers to a more general headset. Note that the term headset here refers to a head-mounted unit which comprises a visual display, and thus comprises all actual smart glasses. However, preferably, the term refers to headsets which comprise both a visual display which allows digital image representation, and optionally a view on the actual surroundings. Said view on the actual surroundings may be via da direct view (transparent visor) or via a digital representation (for instance, Oculus Rift). In case of actual smart glasses, the display of the actual surroundings is via the (transparent) spectacles. In case of headsets with no direct view on the surroundings (such as the Oculus Rift), the display of the surroundings is via a digital image on the display of the headset.

The term "app" refers to a (computer) program designed to run on an electronic device, such as a smartphone, tablet, PC, laptop, etc. In particular embodiments, this relates to a mobile electronic device, such as a smartphone, tablet, etc., in which case the term "mobile application" or "mobile app" can also be used.

The term "hybrid display" refers to a display which is (partly) see-through but is adapted to visualize digital images as well, thus creating a hybrid image.

The term "interactive objects" refers to virtual items with which a user can interact via the navigation system of the smartphone, be it via direct touch or other actions. Interactions can include moving between such objects (scrolling), selecting objects, as well as other interactions (such as 'tap and hold').

The term "headset-interactive objects" refers to virtual items with which a user can interact via the navigation system of the headset. Interactions can include moving between such objects (scrolling), selecting objects, as well as other interactions (such as 'tap and hold'). A headset touch navigation (and interaction) system typically has at least three or four standard actions, namely 'forward', 'ok' or 'enter' and typically also 'return' or 'back', and/or 'backward' (as backward is in principle not necessary for cycling through a list if it is looped). The two former can allow moving through a number of interactive objects that are visualized, the latter can then confirm a selection that is obtained by moving through the list to a certain object (while a prolonged pressing of the 'ok' button can signify the 'tap and hold' interaction, for instance).

The term "headset navigation system" refers to an input system through which a user may provide input to the headset. Said headset navigation system may comprise and be operated via any one or more of the following subsystems: touchpad, keyboard, voice command/recognition, head orientation (pointer), head movement, pupil tracking (with or without 'blinking' as a defined command), and others.

The term "proximity detection" and "proximity sensor" refers to the detection of, and a sensor capable of said detection, of the, at least partial, obstruction of the smartphone's visual display. Typically this is via one or more in-built sensors that may operate via various mechanisms (as discussed further in the text). It should be noted that the term does not place any limitation on the type of sensor or detection.

The term "compatibility mode" refers to a mode of the smartphone which adapts the display for use on other mediums, in this case on a headset. The visualized content on the display of the smartphone is specifically adapted to better fit the display of the other medium, which adaptations can comprise: reducing and/or increasing font size; changing clarity; changing position of interactive objects; removing certain non-critical content; locking the display in or out of landscape mode; and others.

The term "adapted contents" refers to the adaptation of the contents on the smartphone or tablet display to the headset display, whereby the interactive objects of the smartphone visual display are converted into headset-interactive objects. Note however, that in more preferred embodiments, the adapted contents may comprise further (visual) adaptations, for instance anti-aliasing filter, increase in size of text, etc.

The present invention provides a computer-implemented method for automatic conversion and display of contents on a visual display of an electronic display device, preferably a smartphone or tablet, to a visual display of a headset, preferably smart glasses, said headset comprising a navigation system for interacting with the display of the headset, the method comprising the steps of:
a. preferably detecting a user-allowed setting on the electronic display device, preferably the smartphone or tablet, allowing access to the display content of the electronic display device;
b. forcedly starting and maintaining, preferably upon detection of at least the user-allowed setting, a compatibility mode on the electronic display device, which comprises the following, reiterating steps:
   a. retrieving information with respect to interactive objects of the contents of the visual display of the electronic display device, said information with respect to said interactive objects comprising at least location and size, and preferably shape, of said interactive objects on the visual display of the electronic display device;
   b. adapting a set of the interactive objects into a set of headset-interactive objects, whereby the headset-interactive objects are interactable via the navigation system of the headset;
   c. creating a mapping scheme between interactions on one or more of said set of headset-interactive objects to one or more corresponding interactions on one or more of said set of interactive objects on the smartphone or tablet;
c. displaying the adapted contents of the display on the electronic display device onto the display of the headset, whereby said adapted contents are forwarded over a bidirectional data connection between the headset and the electronic display device, preferably whereby the displayed adapted contents on the visual display of the headset is substantially the same as the displayed contents on the visual display of the electronic display device;
whereby activation of a headset-interactive object by an interaction via the navigation system of the headset is mapped onto activation of the corresponding one or more interactive objects according to said mapping scheme.

It is of note that the applicant foresees the possibility that not all of the interactive objects on the smartphone visual display need to be visualized on the headset display, as some options will no longer be necessary or possible (for instance, an option that changes the visualization). As such, only a set of the interactive objects will be mapped (although said set will typically comprise most of the interactive objects).
Furthermore, the applicant foresees the possibility that certain new headset-interactive will need to be created (for instance, a "return" button, which is physically provided in most smartphones and not always as an interactive object on the screen), although this will not always be the case.

The step of detecting the user-allowed setting, which allows access to the display content of the smartphone is preferably present to ensure that the method is only executed when this is desirable, although it is not required. Of course, it can be so for specific situations, that the method is always running (or allowed), in which case the user-allowed setting would be greenlighted as a standard setting (thus meaning the allowance by the user is not necessarily present anymore). An example would be a smartphone dedicated to the mentioned head set compatibility, which automatically allows said access. However, since the method is aimed at working for all smartphones, and not solely for dedicated devices to run this method, the step is preferably present in the method. Additionally, in most smartphone-applications which require access to certain functionalities of the smartphone, this needs to be approved by the user. Typically, access to the camera, GPS location is requested, but in this case - at least - access to the displayed content itself, and in certain embodiments, an allowance to change aspects of said displayed content and/or add additional content is required. As such, the user-allowed setting can be a one-time allowance which persists until revoked, or can be required to be granted repeatedly.
Preferably, a further confirmation is required to run the method, in order for the smartphone to 'realize' that the user wishes the headset to receive the visual display content, and have the headset run as a display for the smartphone. This confirmation can be in the form of a dedicated application to the conversion being run by the smartphone, and/or as a setting which is activated by the user.
The steps of retrieving interactive object information, and adapting the interactive objects are reiterated, as each time the visual display content of the smartphone is changed (for instance, a new page is opened, an interactive object is selected, the marker is moved, etc.), the contents of the visual display need to be re-retrieved, to be re-adapted to a headset-conform representation, to allow the user to see and navigate the new display content. The reiteration of said steps can be based on the detection of a user interaction with the headset, can be periodical (X times per second, for instance) and/or can be based on detection of significant change of the smartphone visual display (and/or specifically, change of the interactive objects therein). As is apparent to the person skilled in the art, two or more of the above conditions can be observed for reiterating the steps, which will be discussed further in the text.

In a preferred embodiment, the interactions via the navigation system of the headset are converted to the corresponding interactions on the smartphone or tablet according to said mapping scheme.

In an especially preferred embodiment, said conversion takes place on the smartphone or tablet, thus reducing the computational needs and power consumption on the headset. We note for the latter that the high power consumption of headsets is a well-known problem in the industry, since power sources tend to be heavy and/or voluminous while reduction of weight and size of the headset are highly valued by customers. The applicant thus provides a software layer that runs the compatibility mode, receiving the user interactions issued by the user via the headset (whether it be via touchpad, voice command, head tracking or others), and converts these to the effective instruction(s) the smartphone or tablet would generate if said headset interaction would have been received as a direct smartphone (or tablet) interaction. Subsequently these instructions are issued to the application that is running on the smartphone or tablet directly.
Note that the headset interactions are not directly provided as is to the navigation system of the smartphone or tablet, but are converted by a software layer on the smartphone into the corresponding actual instructions for the running application(s).

In a preferred embodiment, maintaining the compatibility mode comprises the following steps: automatically adapting the shape and size of the contents of the visual display of the smartphone, preferably whereby the smartphone's compatibility mode automatically performs said adaptation, said adaptation preferably comprising at least increasing the font size of text objects on the visual display of the smartphone (meaning text objects that are recognized as text objects by the smartphone, would undergo an increase in font size). Said step of automatically adapting the shape is dependent upon detection of proximity of an object within a predefined range of a proximity sensor of the smartphone, said predefined range preferably being at most 5 cm, more preferably at most 2 cm.

The applicant firstly notes that a main concern with smartphone display in view of headset displays, is that the smartphone display is larger (and allows a higher resolution). If the 'normal' display mode of the smartphone were to be maintained and forwarded as the display content for the headset, this would by and large result in illegible text on the headset display. Therefore, the method preferably comprises the automatic enlargement of text content on the display. It is of particular note that many smartphones running on Android as their operating system are provided with an accessibility mode that can be enabled which, amongst other features, allows to automatically enlarge the text content, as a service to, for instance, visually impaired users, the elderly, etc.
Secondly, the applicant wishes that the adaptation takes place automatically without significant prompting of the user. Therefore, use was made of the proximity sensor (or similar tech such as a light sensor or a 3D sensor) which is present in any modern type of smartphone. The applicant primarily wishes that the smartphone can still be used by the user while connected to the headset when the user wishes this, but also that the smartphone recognizes when to 'switch' modes, and revert to the headset.
It is in this light that, upon detection of the proximity of an object to the sensor of the smartphone within a certain range (in front of the smartphone, i.e. before the front of the smartphone), the smartphone changes its mode to suit displaying its content of the headset, and interaction is possible via the headset. This mode is particularly triggered by putting the phone in the user his or her pockets, or closing a smartphone cover over the sensor.
Upon withdrawing the phone, the object is no longer detected, and preferably, the phone will return to its original mode, allowing the user to interact easily with the phone directly, instead of via the headset (although optionally, interaction via the headset can remain possible).

This improvement is especially directed to operating conditions where the operational mode of the assembly (smartphone and headset) is switched often. For instance in industrial settings where the hands are often occupied, the user operates in 'headset' mode with the smartphone in the pocket. Once the user's hands are free, he or she may withdraw the smartphone from the pocket, which disables the conversion of the displayed content, reverting the display to its normal version, and the user can freely interact with the smartphone.
Inversely, the advantages of the present invention are clear as well, as it allows the standard operational mode of a user to be hands-free, giving the user the option to perform other operations with his or her hands, for instance driving, operating machinery, etc. With this improvement, the user is then only rarely required to step out of 'hands-free' mode and operate the smartphone or tablet with his or her hands, only when the situation dictates such actions. This strongly supports the change in mentality foreseen in the future, where smartphones, tablets and the likes will become more and more accessible without using the hands.

In a further preferred embodiment, said detection of the proximity of an object automatically locks the visual display of the smartphone in landscape mode, thereby locking the displayed contents on the visual display of the smartphone to landscape mode, preferably whereby absence or interruption of said detection of proximity of an object, unlocks the visual display of the smartphone from landscape mode.

The adaptation of the smartphone screen mode will cause the smartphone processing unit to generate a landscape version of what is to be displayed on the smartphone screen. Considering that the displays of headsets tend to be shaped as lying rectangles, thus with a base wider than its height, this creates a smaller discrepancy between the generated image (and the data for this image) for the smartphone and the form it is to be displayed in for the headset. By locking the smartphone screen to landscape mode, the further conversion to headset contents will be more limited, and not require an extensive reorganization of the (interactive) objects and/or text in the smartphone image, although some rescaling, re-rendering and/or other actions (spatial anti-aliasing) will typically still need to be performed for improved user friendliness.

In a preferred embodiment, the method further comprises:
a. communicating to the smartphone user interactions on the headset with the headset-interactive objects;
b. processing said interactions by the smartphone and adapting the contents of the visual display of the smartphone based on said interactions.

All headset interactions (events) are communicated to the smartphone, which can, based on the reported interactions, update its (display) contents to be displayed, which in turn is then adapted for the display of the headset. This further emphasizes that the processes are (primarily) still being run on the smartphone, and that the compatibility mode simply adapts the contents to be displayed on the smartphone to a form fitting the display of the headset, which acts as a screen and input means.
It should be noted that the compatibility mode will employ a 'translation' scheme to convert headset interactions into their proper counterparts for the host smartphone. However, given the strong overlap in interactive possibilities between the two platforms, this can be implemented rather straightforward, as discussed further in this document.

In a preferred embodiment, the method comprises a step of compatibilizing the adapted contents of the visual display of the headset for display on the display of the headset, said step of compatibilizing comprising at least a step of image processing, preferably whereby image processing comprises the smartphone running an anti-aliasing algorithm on said contents, or the headset running an anti-aliasing algorithm on the forwarded adapted contents on the headset before said forwarded adapted contents are displayed. The applicant notes however, that the compatibilization is preferably performed at the end of the smartphone, as this is usually better equipped, and as such makes better use of its power than the headset would. To this end, the applicant would provide a software to run on the smartphone end, which is capable of running the compatibilization processes, amongst others.

Due to the substantial decrease in resolution from the smartphone display to the headset visual display, the applicant noticed that a (spatial) anti-aliasing step is preferred to remove distortion artifacts.

In a preferred embodiment, the step of displaying the adapted contents of the display of the smartphone onto the display of the headset is only performed on detection of proximity of an object within a predefined range of a proximity sensor of the smartphone, said predefined range preferably being at most 5 cm, more preferably at most 2 cm. Most preferably, said step is displayed upon detection of an object within a range of at most 0.5 cm from the front of the smartphone. It is the applicant's intent to only forward the content of the smartphone display to the headset display when the smartphone is considered unavailable (for instance, in the pocket of a user). In the most preferred embodiment, both automatically adapting the shape and size of the contents of the visual display of the smartphone, and is displaying the adapted contents of the display of the smartphone on the display of the headset, is dependent on the proximity sensor of the smartphone.
The applicant further notes that additional 'triggers' can be provided, which result in the headset taking over from the smartphone, as it is not always possible or desirable to stow away the smartphone to trigger the proximity detection. The method can for instance provide for a button, slider or other interactive objects, on the smartphone screen. Upon interaction with said objects, the user can force the headset to take over from the smartphone, and thus trigger automatically adapting the shape and size of the contents of the visual display of the smartphone, and playing the adapted contents of the display of the smartphone on the display of the headset.

In a particularly preferred embodiment, at least one trigger for initializing the compatibility mode is a detection of an interaction with the headset. Such an interaction may be a user interacting with the touchpad, via a predefined voice command received by the headset, via a predefined movement (pattern) detected by the smartphone, etc.

In a particularly preferred embodiment, most preferably in combination with the embodiment above as its inverse, at least one trigger for terminating the compatibility mode is a detection of an interaction with the smartphone. Such an interaction may be a user interaction with the touch display, physical buttons, via a predefined voice command received by the smartphone, via a predefined movement (pattern), for instance shaking, detected by the smartphone, etc.

In a preferred embodiment, upon detection of proximity of an object within a predefined range of a proximity sensor of the smartphone, the visual display of the smartphone is disabled and/or reduced in brightness and/or touchscreen of the visual display of the smartphone is disabled. Although disabling the touchscreen capacities of the smartphone is not always possible due to restrictions imposed by the manufacturer, these restrictions can still be overcome by, via software, discarding all touch events, thus effectively disabling the touchscreen capacities.

Note that the reduction of brightness/disabling of the visual display may also be enacted upon entering compatibility mode.
In certain embodiments, the touchscreen functionality of the smartphone may also be disabled during compatibility mode (and/or under one or more of the aforementioned conditions). This can be undone via one of a number of predefined interactions, for instance pressing a physical button of the smartphone, fingerprint identification on the smartphone, absence of an object proximate to the display of the smartphone, etc.

The measures of above are mainly undertaken to minimize power consumption by the smartphone. This would allow the user to, when using the headset, put the smartphone away (in his or her pocket), which can be detected by the smartphone's proximity sensor. Upon detection, it will reduce the brightness or entirely shut down the display of the smartphone, and can potentially even shut down the touchscreen functionality of the display. In case of the latter, it is also ensured that no conflicting instructions can be given, as only the headset can provide instructions.

In a preferred embodiment, the step of automatically adapting the shape and size of the contents of the visual display of the smartphone and/or the step of locking the visual display of the smartphone in landscape mode, can be interrupted under one or more of the following conditions: detection of direct user interaction with the smartphone; detection of incident light over a predetermined intensity on the smartphone; disconnection of the smartphone and the headset; absence of detection of proximity of an object within a predefined range of a proximity sensor of the smartphone.

As discussed previously for the proximity sensor, it is preferable that one or more triggers exist for automatically reverting the smartphone visual display to its 'regular' version (i.e., no longer adapted for headset display). Preferably, these triggers are the reverse of one or more conditions that cause the automatic adaptation to headset display mode of the smartphone visual display. This allows the user to regain some functionalities of the usual display of the smartphone, in particular the way visuals are displayed.

In a preferred embodiment, the compatibility mode is entirely - or at the very least the step of adapting the interactive objects into headset-interactive objects and/or providing markers - interrupted under one or more of the following conditions (preferably upon detection of any of these conditions, whether separate or in combination): detection of direct user interaction with the smartphone; detection of incident light over a predetermined intensity on the smartphone; disconnection of the smartphone and the headset; absence of detection of proximity of an object within a predefined range of a proximity sensor of the smartphone. Note that this elaborates further on the previous paragraph, where at least the visual display is merely returned to its 'normal' operation mode, while in this further embodiment, the smartphone is returned entirely to its 'normal' operation mode, allowing for instance touch interaction with the smartphone, which in some embodiments is denied while in compatibility mode.

The above conditions allow for an easy and intuitive switch from headset to smartphone. For instance, when an operator running a mobile application (e.g. inspection of an industrial installation with variating parameters) on the headset while his or her smartphone is stored in a pocket arrives at a step where he or she is to produce an input which cannot be simply provided via a positive or negative command (e.g. actual numerical values, written feedback, etc.), he or she can take the smartphone out of his or her pocket (or uncover the sensor), thus exposing it to light or interaction of the user on said smartphone. At this point, the compatibility mode is interrupted, so the user can provide the required input via the more amenable touchscreen (keyboard) of the smartphone. Afterwards, the smartphone can be stored again in the pocket, at which point the compatibility mode can be resumed or restarted.
In a further preferred embodiment, said interruption will end the visual display on the headset (although it can be continued), and seamlessly revert to a mobile application that is run on the smartphone.

In a preferred embodiment, upon detection of a substantial change in the interactive objects of the displayed contents on the visual display of the smartphone, step b.i. is automatically reiterated, preferably whereby a substantial change amounts to at least 1% of the previous interactive objects. More preferably, this amounts to at least 1.5%, even more preferably at least 2% or even 2.5%. Most preferably, this amounts to at least 4% or even 5%.
Note that a number of interactive objects can be excluded from being taken into account for the 'change', such as a 'top bar' in the screen, in which the time is displayed, the connectivity, operator, etc., as these can change often but hold no meaning in most applications (and are instead considered background information).

As mentioned previously, the step of retrieving the information is repeatedly performed in order to follow possibly changing elements on the display of the smartphone.

In a preferred embodiment, the position of the marker and/or the identifier of the interactive object, (or association to a certain interactive object), can be maintained or saved while the image of the smartphone is refreshed due to certain substantial changes. Preferably, the position is specifically maintained in changes where the interactive object at which the marker was located/to which the marker was associated, remains visible. This modification ensures that the marker is not 'reset' (typically) to a first position where the marker starts upon launch of a screen, when further interactions are still necessary. An example of this can be where the selection of a certain interactive object prompts a (further) drop-down menu to be displayed from the selected interactive object. By maintaining the position upon the change (to display the menu), the user can then proceed to select an object within the drop-down menu, and so on.

In a preferred embodiment, during the conversion to the adapted contents, smartphone-compatible visual navigational elements are removed. The applicants notes that these take up valuable space on the display, while they are of no use when the user is using the headset instead of the smartphone.

In a particularly preferred embodiment, the user interactions are primarily, if not solely, issued via voice command. The applicant notes that future versions of headsets, and smart glasses will rely more and more on voice command and eschew actual navigation buttons on the headsets, or at least limit this mode of operation as much as possible. As such, the voice commands that would be used in direct interaction with the smartphone, are used to interact with the headset, and subsequently provided to the smartphone. Note that the voice command is not forwarded as a voice command directly, but as a direct instruction to the smartphone to perform the action that it would perform had the voice command been issued directly to the smartphone.
The invention at hand specifically provides a mapping between possible user interactions on the headset to 'matching' interactions on the smartphone. Upon detection of a particular detection of said headset interactions, the method automatically maps this to the corresponding smartphone interaction and provides the instructions following from said corresponding smartphone interaction to the smartphone, and specifically to the app that is running on the smartphone. An example can be the user saying the text connected to a headset-interactive object that is displayed, for instance "Start camera app". The headset receives said voice command, and the voice command is recognized as being connected to an interaction with the particular headset-interactive object (Camera app icon on headset display), and subsequently mapped onto the corresponding interaction with the (smartphone) interactive object (Camera app icon on smartphone display), resulting in the smartphone receiving, from the software running the method of the invention, the instruction of activating the Camera app application, either directly or in the form of a touch event on the Camera app icon on the smartphone display being simulated by the software.

Further to this point, in a further preferred embodiment, the voice commands to the headset are converted to instructions for the smartphone according to a dynamic conversion scheme which depends on the displayed contents.

In a further preferred embodiment, the conversion scheme allows for a number of preprogrammed additional commands (that access certain smartphone modalities), relating to the camera, menu, general settings, and/or others, even though these are not interactive objects on the display of the camera. A user can for instance issue the voice command "Take picture", which is automatically recognized as a predefined command, and correctly converted to the corresponding instruction for the smartphone. Other such commands can be "Show settings", "Reduce/Increase brightness", "Reduce/Increase volume", but can also relate to certain navigational commands, such as "Back" or "Return" and others. Therefore, in a more preferred embodiment, the headset (and the software running in said headset) is provided with a predefined list of preprogrammed commands that are independent of the interactive objects. The software on the headset is adapted to interact with the smartphone (software) to recognize the type of smartphone, and thereby identify the instructions (control signal) the smartphone is accustomed to receive for the preprogrammed commands in the predefined list.

In a preferred embodiment, while the compatibility mode is maintained, and preferably always when the headset is connected to the smartphone, and if the headset comprises an audio output system, any audio signals of the smartphone are forwarded to and performed by the audio output system of the headset.

In a preferred embodiment, at least while the compatibility mode is maintained, preferably always when the headset is connected to the smartphone, and if the headset comprises an audio input system, any audio input signals of the user into the audio input system of the headset, are forwarded to the smartphone, and subsequently processed as an audio input signal of the smartphone.

In a preferred embodiment, the method is provided as an accessibility application on the smartphone. Presenting the computer-implemented method as an accessibility application allows - on certain platforms - access to internal workings of mobile applications that run on said platforms, further simplifying the conversion of the contents to be displayed to a setting amenable to the headset display (via so-called accessibility services). An added advantage is that such accessibility applications are toggleable by the user.

In a preferred embodiment, the headset is a set of smart glasses, preferably comprising one or more see-through lenses, and a digital display for displaying the headset-compatible contents.

In a preferred embodiment, a set order of the displayed headset-interactive objects is obtained from the retrieved information of the software running on the smartphone, whereby the navigational system of the headset allows the user to cycle through the displayed headset-interactive objects according to said set order.

In a preferred embodiment, upon an intention to display an interactive keyboard comprising a number of keys on the smartphone, said standard, non-headset-optimized, interactive keyboard is not displayed, and an optimized headset-interactive keyboard is displayed instead, preferably towards the bottom of the visual display of the smartphone, whereby said headset-interactive keyboard is displayed as a, preferably linear, list of the keys through which can be cycled via the navigational system of the headset.

In a preferred embodiment, upon confirmation of a selection of a headset-interactive object with at least two possible interactions, a headset-navigable list of the hierarchic possible interactions for the confirmedly selected headset-interactive object is displayed on the headset display, said navigable list enumerating one or more possible interactions for the confirmedly selected object, whereby the one or more possible interactions can be navigated, selected and confirmed via the headset navigation system.

As mentioned, preferably a marker or cursor is used to indicate a current selection or position of the user's attentions. This can for instance be a rectangle surrounding a selected displayed (interactive) object, and/or said selected object can be highlighted, enlarged and/or others. Said marker or cursor can then be moved between the headset-interactive objects via the navigation system of the headset according to a predetermined order of the objects (typically in an order related to the spatial distribution of the objects on the headset display).

In a further preferred embodiment, upon confirmation of a selection, a navigable list is displayed on the headset display, said list enumerating one or more executable actions for the confirmedly selected object.

In a preferred embodiment, during the compatibility mode, font size of visually displayed text on the headset display can be increased according to a predetermined scheme, said increase depending on original font size and/or font type on the smartphone display. The scheme can be linear, meaning that original font differences are maintained, but this is not necessarily so. For instance, groupings can be made of the original font sizes, which are all converted to a predetermined group font size for the text to be displayed on the headset. The latter can be useful as the headset display is smaller, and the reduced font size spectrum can simplify the displayed contents.

In a preferred embodiment, a marker indicative of a user selection of one or more said headset-interactive objects can be visually represented on the display of the headset, said marker being positioned based on the retrieved information with respect to the interactive objects, preferably upon interaction of the user with the navigation system of the headset, on the visual display of the smartphone based on said location and said size, said marker preferably being a box surrounding the visually represented headset-interactive object, preferably whereby said marker is provided on the visual display of the smartphone, alternatively said marker preferably a transparent layer on top of the represented headset-interactive object.

In a preferred embodiment, the method may comprise providing an adapted marker, which serves as a cursor or pointer, as (direct) touch interaction with the touchpad of the host (smartphone or tablet) is no longer possible. The compatibility mode will thus provide a marker which can move between a number of predefined interactive objects, which each have a location on the display of the headset, usually in the form of an icon and/or text representation. The headset navigation system allows the user to, for instance, move a cursor between objects, and to select an object (via a confirmation button for instance, or via an established command) or to move back a hierarchical level (again, via a rejection button, tapping, or an established command). This marker can for instance be provided in the form of a border or box around the selected objects.
It should be noted on the subject of the marker that different paths are available. The marker can be directly represented on the smartphone screen, which typically will lead to the smartphone running the calculations and necessary steps to position the marker, based on the information with respect to interactive objects. Once the marker is provided, the image is forwarded to the headset display, making the marker visible there as well. Any headset navigational actions ('back', 'enter', 'left', 'right', 'up', 'down', etc.) of the user, will then be forwarded to the smartphone who will enact the forwarded command on the marker, and the new display of the smartphone is again forwarded to the headset display.
Alternatively, the headset may (at least partially) run the marker aspect, which means that the smartphone simply forwards its visual contents (without a marker) to the headset, which also receives information regarding the interactive objects (in particular, position on the display, size, possibly shape) and visually represents the marker on the headset display directly (and not, or optionally, on the smartphone display), based on said information. In such a case, the headset navigation actions can in some occasions be enacted directly by the headset (when the marker simply moves in the display without more 'intense' interactions with the smartphone, such as starting a certain program, entering a number, etc.). Certain commands will still be forwarded to the smartphone as they will create new content for the display of the smartphone.

The invention is further described by the following non-limiting examples which further illustrate the invention, and are not intended to, nor should they be interpreted to, limit the scope of the invention.

The present invention will be now described in more details, referring to examples that are not limitative.

### EXAMPLE:

Figure 1 shows a schematic overview on the functioning of a method according to the invention.
Once an app is running on the smartphone, which is connected to a headset, and the compatibility mode is activated, automatically all relevant information on the smartphone display content is collected, specifically relating to the interactive objects, elements 1 to 4, on the smartphone display. A set of these, in this case elements 1 to 3, is mapped onto corresponding headset-interactive objects, which are visualized on the headset display as the adapted (headset display) contents. Note that typically, when the phone is carried in the pocket of the operator, the smartphone display and app will be locked in landscape mode and the screen content of the smartphone will be copied entirely and visualized on the headset display, to which the headset-interactive objects are added.
Based on the interactions (from the user) with one or more of the headset-interactive objects via the headset navigation system, virtual instructions are generated for the headset-interactive objects, for instance activation of a certain headset-interactive object, which are subsequently mapped onto corresponding instructions for the interactive objects on the smartphone (for instance, activation of the interactive object on the smartphone corresponding to the headset-interactive object). Said instruction is then provided to the headset navigation system, which typically enacts a change in the displayed contents on the smartphone visual display, thus restarting the cycle.
An optional step is shown in case of use of a marker, in which interactions with the headset navigation system cause the marker to be updated (position, etc.) in the headset display content.

It is supposed that the present invention is not restricted to any form of realization described previously and that some modifications can be added to the presented example of fabrication without reappraisal of the appended claims. For example, the present invention has been described referring to smart glasses, but it is clear that the invention can be applied to headsets in general or to all head-mounted apparatuses with a digital display.

## Claims

1. Computer-implemented method for automatic conversion and display of contents on a visual display of a smartphone or tablet to a visual display of a headset, preferably smart glasses, said headset comprising a navigation system for interacting with the display of the headset, said navigation system preferably comprising at least voice command capacity, the method comprising the steps of:
a. preferably detecting a user-allowed setting on the smartphone or tablet allowing access to the display content of the smartphone or tablet;
b. forcedly starting and maintaining, preferably upon detection of at least the user-allowed setting, a compatibility mode on the smartphone or tablet, which comprises the following, reiterating steps:
i. retrieving information with respect to interactive objects of the contents of the visual display of the smartphone or tablet, said information with respect to said interactive objects comprising at least location and size, and preferably shape, of said interactive objects on the visual display of the smartphone or tablet;
ii. adapting a set of the interactive objects into a set of headset-interactive objects, whereby the headset-interactive objects are interactable via the navigation system of the headset;
iii. creating a mapping scheme between interactions on one or more of said set of headset-interactive objects to one or more corresponding interactions on one or more of said set of interactive objects on the smartphone or tablet;
c. displaying the adapted contents of the display on the smartphone or tablet onto the display of the headset, whereby said adapted contents are forwarded over a bidirectional data connection between the headset and the smartphone or tablet, preferably whereby the displayed adapted contents on the visual display of the headset is substantially the same as the displayed contents on the visual display of the smartphone or tablet;
whereby activation of a headset-interactive object by an interaction via the navigation system of the headset is mapped onto activation of the corresponding one or more interactive objects according to said mapping scheme.

2. Computer-implemented method according to claim 1, whereby the interactions via the navigation system of the headset are converted to the corresponding interactions on the smartphone or tablet according to said mapping scheme.

3. Computer-implemented method according to claim 1 or 2, maintaining the compatibility mode further comprising the following step:
i. automatically adapting the shape and size of the contents of the visual display of the smartphone or tablet, preferably whereby the smartphone or tablet's compatibility mode automatically performs said adaptation, said adaptation comprising at least increasing the font size of the smartphone or tablet;
whereby said step of automatically adapting the shape is dependent upon detection of proximity of an object within a predefined range of a proximity sensor of the smartphone or tablet, said predefined range preferably being at most 5 cm, more preferably at most 2 cm.

4. Computer-implemented method according to the preceding claim 3, whereby said detection of the proximity of an object automatically locks the visual display of the smartphone or tablet in landscape mode, thereby locking the displayed contents on the visual display of the smartphone or tablet to landscape mode, preferably whereby absence or interruption of said detection of proximity of an object, unlocks the visual display of the smartphone or tablet from landscape mode.

5. Computer-implemented method according to any one of the preceding claims 1 to 4, wherein the method further comprises:
a. communicating to the smartphone or tablet user interactions on the headset with the headset-interactive objects;
b. processing said interactions by the smartphone or tablet and adapting the contents of the visual display of the smartphone or tablet based on said interactions.

6. Computer-implemented method according to any of the preceding claims 1 to 5, furthermore comprising a step of:
compatibilizing the adapted contents of the visual display of the headset for display on the display of the headset, said step of compatibilizing comprising at least a step of image processing, preferably whereby image processing comprises the smartphone or tablet running an anti-aliasing algorithm on said contents, or the headset running an anti-aliasing algorithm on the forwarded adapted contents on the headset before said forwarded adapted contents are displayed.

7. Computer-implemented method according to any one of the preceding claims 1 to 6, whereby upon detection of proximity of an object within a predefined range of a proximity sensor of the smartphone or tablet, the visual display of the smartphone or tablet is disabled and/or reduced in brightness and/or touchscreen capacities of the visual display of the smartphone or tablet are disabled.

8. Computer-implemented method according to any one of the preceding claims 1 to 7, and according to claims 2 and/or 3, whereby the step of automatically adapting the shape and size of the contents of the visual display of the smartphone or tablet and/or the step of locking the visual display of the smartphone or tablet in landscape mode, is interrupted under one or more of the following conditions: detection of direct user interaction with the smartphone or tablet; detection of incident light over a predetermined intensity on the smartphone or tablet; disconnection of the smartphone or tablet and the headset; absence of detection of proximity of an object within a predefined range of a proximity sensor of the smartphone or tablet.

9. Computer-implemented method according to any one of the preceding claims 1 to 8, wherein upon detection of a substantial change in the interactive objects of the displayed contents on the visual display of the smartphone or tablet, step b.i. is automatically reiterated, preferably whereby a substantial change amounts to at least 2.5% of the previous interactive objects.

10. Computer-implemented method according to any one of the preceding claims 1 to 9, wherein during the conversion to the adapted contents, one or more smartphone and/or tablet-compatible visual navigational elements are removed.

11. Computer-implemented method according to any one of the preceding claims 1 to 10, wherein while the compatibility mode is maintained and if the headset comprises an audio input system, any audio input signals of the user into the audio input system of the headset, are forwarded to the smartphone or tablet.

12. Computer-implemented method according to any one of the preceding claims 1 to 11, wherein while the compatibility mode is maintained and if the headset comprises an audio output system, any audio input signals of smartphone or tablet are forwarded to and reproduced by audio output system of the headset.

13. Computer-implemented method according to any one of the preceding claims 1 to 12, wherein a set order of the displayed headset-interactive objects is obtained from the retrieved information of the software running on the smartphone or tablet, whereby the navigational system of the headset allows the user to cycle through the displayed headset-interactive objects according to said set order.

14. Computer-implemented method according to any one of the preceding claims 1 to 13, wherein upon an intention to display an interactive keyboard comprising a number of keys on the smartphone or tablet, said interactive keyboard is not displayed, and a headset-interactive keyboard is displayed instead, preferably towards the bottom of the visual display of the smartphone or tablet, whereby said headset-interactive keyboard is displayed as a, preferably linear, list of the keys through which can be cycled via the navigational system of the headset.

15. Computer-implemented method according to any one of the preceding claims 1 to 14 and according to claim 2, whereby converting the interactions via the navigation system of the headset to the corresponding interactions on the smartphone or tablet according to said mapping scheme is performed on the smartphone or tablet.
